# EUROPEAN PATENT SPECIFICATION

(11) **EP 1 025 052 B1**
(45) Date of publication and mention of the grant of the patent: **26.03.2003**
(21) Application number: 98948628.7
(22) Date of filing: 14.10.1998
(51) Int. Cl.: C02F 3/34

(54) **METHOD FOR REDUCING THE EFFECT OF DETERGENTS UPON GERMINATION AND/OR GROWTH OF MICROORGANISMS**
VERFAHREN ZUR VERRINGERUNG DER WIRKUNG VON REINIGUNSMITTELN AUF DIE KEIMUNG UND/ODER DAS WACHSTUM VON MIKROORGANISMEN
PROCEDE PERMETTANT DE REDUIRE L'ACTION DE DETERGENTS LORS DE LA GERMINATION ET/OU CROISSANCE DE MICRO-ORGANISMES

(30) Priority: 20.10.1997 EP 97870158
(43) Date of publication of application: 09.08.2000
(73) Proprietor: Realco 2001 S.A./N.V., 1348 Louvain-la-Neuve (BE)
(72) Inventor: LEDENT, Philippe, B-4000 Liège (BE); MICHELS, Henri, B-4500 Huy (BE); AGATHOS, Spyros, B-1150 Bruxelles (BE); DEMYTTENAERE, Philippe, B-1367 Hédenge (BE); BLACKMAN, Gordon, B-1380 Lasne (BE)
(74) Representative: Van Malderen, Joelle
(86) International application number: BE9800152
(87) International publication number: WO99020571

(56) References cited:
- W.S. ADNEY ET AL.: "Detection of extracellular hydrolytic enzymes in the anaerobic digestion of municipal solid waste." BIOTECHNOLOGY AND APPLIED BIOCHEMISTRY, vol. 11, 1989, pages 387-400, XP002060587 cited in the application
- CHEMICAL ABSTRACTS, vol. 122, no. 16, 17 April 1995 Columbus, Ohio, US; abstract no. 195809p, J.D. ROUSE: "influence of surfactants on microbial degradation of organic compounds" page 578; column 1; XP002060588 cited in the application & CRIT. REV. ENVIRON. SCI. TECHNOL., vol. 24, no. 4, 1994, pages 325-370,

## Description

### Field of the invention

The present invention is related to a method for removing or reducing the effect of detergents upon germination and/or growth of micro-organisms, which will allow the improving of industrial fermentation processes, in particular treatment of specific polluted aqueous effluents, based upon the use of said micro-organisms.

### Background of the invention

Detergents, comprising surfactant or a mixture of surfactants (anionic, cationic, amphoteric and/or non-ionic surfactants), have a variety of industrial uses and are common ingredients in laundry, household or personal (e.g., shampoos and cosmetics) cleaning products.

Detergents comprising the surfactant linear alkylbenzene sulfonates (LAS) are the most widely used detergents in commerce today. These compounds are discarded in wastewater and normally removed during sewage treatment. The LAS concentrations in effluents from kitchens, bath- and laundry-rooms vary between 35 and 125 mg.liter⁻¹ (Durand & Golicheff, 1978).

Many literature reports have been published about the potential inhibitory effects of surfactants present in detergents upon the growth of micro-organisms and results are often a matter of controversy. For instance, Konopka et al. (1996) mentioned that LAS-degrading microbes were inhibited at LAS concentrations of >40 mg.liter⁻¹, whereas Sigoillot and Nguyen (1992) reported on cultures enriched at LAS concentrations of up to 700 mg.liter⁻¹.

Rouse et al. (Crit. Rev. Environ. Sci. Technol. Vol. 24, No. 4, pp. 325-370 (1994)) state that steric and conformational compatibility of surfactants with cell membrane lipids and enzymes has an influence on a microbial degradation of organic compounds.

The use of pure cultures or defined consortia of micro-organisms is a widespread technology for the treatment of specific polluted aqueous effluents. Amongst bacteria, strains belonging to the *Pseudomonas, Bacillus, Acinetobacter* and *Rhodococcus* genera are frequently reported (Chitra et al., 1996; Zissi & Lyberatos, 1996; Russian Patent Application 96441455.44; Iliuta, 1997; French Patent Application FR-97154177.14). Fungi and microscopic algae have also many uses in this area (Feijoo et al., 1995; Travieso et al., 1996; Pena et al., 1996; Ahn et al., 1996; Russian Patent Application RU-97152804.14).

The main applications include removal of heavy metals (Macaskie et al., 1997), degradation or precipitation of phenolic compounds (Borja et al., 1995), treatment by precipitation of forest industry effluents (Jaspers & Penninckx, 1996 and International Patent Application PCT/BE93/00014) as well as degradation of fats, oils and greases (Wakelin & Forster, 1997).

The genus *Bacillus* includes a variety of industrially important species that are commonly used as hosts in the fermentation industry (Arbige et al., 1996). Different reasons make *Bacillus* one of the preferred micro-organisms for production by fermentation: most members of the genus are non-pathogenic, relatively easy to manipulate genetically, simple to cultivate and good secretors of enzymes (including proteases, amylases, cellulases and other degradative enzymes). Moreover, *Bacillus* spp. sporulate, a characteristic very useful for the conditioning and the long-term conservation of a commercial product.

Adney et al. (Biotechnology and Applied Biochemistry No. 11, pp. 387-400 (1989)) describe the detection of extracellular hydrolytic enzymes in the anaerobic digestion of municipal solid waste. This publication describes the α-amylase and protease enzymes were detectable at trace level in supernatant samples from stable lab-scale digesters fed municipal solid waste meal. This document describes also that by using a detergent extraction protocol, cellulase, β-glucosidase, α-glucosidase, protease and α-amylase activities were recovered from sludge particulate, but with a very low hydrolytic enzyme activity.

The US patent US-4,940,539 describes devices for the treatment of waste water containing grease and foreigner materials treated by an aqueous composition containing a high amount of a mixture of enzymes (2500 protease units/ml, 200 amylase units/ml, 10 lipase units/ml and 5 cellulase units /ml) and bacterial spores (50.10⁶ bacterial spores/ml), which act on the grease, fat and other materials in the waste water to provide a substantial reduction in total solids and an increase in soluble solids as well as a substantial reduction in the BOD level of the waste water.

Similarly, the US patent US-5,468,375 describes a device for removing or reducing the amount of solid matters on sludge in a household sewage before the waste water is introduced in a municipal sewage treatment system. In said device, high amounts of mixture of bacteria and enzymes are added in the waste water in a chamber where the sludge is digested. Said pre-treatment reduces the burden on the municipal sewage treatment facility and reduces the risk on exceeding the capacity of the facility.

The US patent US-4,237,003 describes a process for the biological purification of liquid waste by using high amounts of anaerobic bacteria in the presence of extracellular enzymes produced by gram positive bacteria and separating said gram positive bacteria and the intracellular enzymes contained therein. As compared to the current techniques, the anaerobic process according to said method reduces the production of sludge and reduces the retention time.

The international patent application WO95/15924 describes that extracellular enzymes from bacillus subspecies in combination with fungal cellulases has been found to synergetically degrade cellulose, carbohydrates, fat and proteins in a sewage treatment, the composition comprising a bacillus subspecies culture and a fungal cellulase.

However, none of these documents describes or teach that low amounts of enzymes can be used for removing or reducing the effect of detergents preferably detergent comprising surfactant(s) upon the spores germination or the growth of micro-organisms and therefore improve the treatment of polluted aqueous effluents.

### Aims of the invention

The present invention aims to provide a method for removing or reducing the effects of detergents upon germination and/or growth of micro-organisms, especially bacterial strains, in an aqueous culture medium.

Another aim of the present invention is to provide a method which does not need the use of expensive and toxic products or processes.

A further aim of the present invention is to provide a method which will additionally improve the industrial fermentation process of said micro-organisms by removing or reducing the effects of said detergents, in particular in the treatment of specific polluted aqueous effluents which contain said detergents.

### Summary of the invention

The present invention is related to a method wherein a sufficient amount of one or more enzyme(s) is added to the aqueous culture medium of a possibly genetically modified micro-organism for removing or reducing the effects of detergents, advantageously detergents comprising surfactants (which are preferably selected from the group consisting of anionic, cationic, amphoteric and/or non-ionic surfactants), upon germination and/or growth of said micro-organism in said aqueous (culture) medium.

Said enzyme is selected from the group consisting of a protease, a cellulase, an alpha-amylase, a lipase or a mixture thereof.

It is meant by an aqueous (culture) medium, any aqueous medium comprising the nutrients (such as carbon, nitrogen and phosphor sources, mineral components like sodium, potassium, ...) which naturally allow the germination and/or growth of a micro-organism present in said medium.

According to the invention, said aqueous (culture) medium is a waste water effluent (which is known to inhibit completely the micro-organism by the important percentage of detergent comprised in it).

According to a preferred embodiment of the present invention, the possibly genetically modified micro-organism is a bacterial strain, preferably selected from the group consisting of the bacteria belonging to the pseudomonas, bacillus, acinetobacter and rhodococcus genera.

According to another preferred embodiment of the present invention, the micro-organism is selected from the group consisting of fungi (including yeasts) and microscopic algae.

It is meant by "removing or reducing the effects of detergents", the capacity of the enzyme to allow and/or to improve the germination and/or growth of a micro-organism in an aqueous culture medium containing said detergents at a concentration which inhibits completely said germination and/or said growth, the capacity of said enzyme to reduce the lag period after which one can measure the increasing of the micro-organism density in said aqueous (culture) medium and/or the capacity of said enzyme to improve or accelerate said growth in an aqueous (culture) medium.

A "sufficient amount of one or more enzyme(s)" means that the amount of the enzyme (s) is comprised between 1 and 5000 µg weight enzyme for an aqueous culture medium of 100 ml comprising between 0,001 and 1000 ppm detergent (preferably comprising a surfactant), advantageously between 10 and 500 µg weight enzyme for an aqueous culture medium of 100 ml comprising between 0,1 and 500 ppm detergent (preferably comprising a surfactant), more preferably between 50 and 400 µg weight enzyme for an aqueous culture medium of 100 ml comprising between 0,5 and 250 ppm detergent (preferably comprising a surfactant). Said amount is particularly low compared to the amounts usually used in the methods and devices of the state of the art.

According to a preferred embodiment of the present invention, the micro-organism is present in the aqueous culture medium in the form of a dormant spore and/or in the form of a vegetative dividing cell.

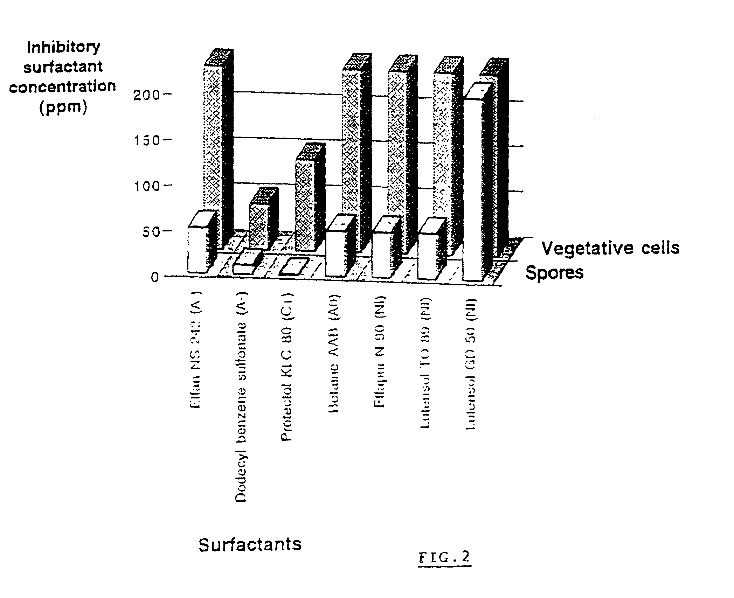

The Inventors have discovered unexpectedly that it is possible with the method according to the invention, to modulate the addition of enzyme according to the wild type of micro-organism, according to its form (dormant spore or vegetative dividing cell) and according to the detergent and the amount of detergent present in the aqueous culture medium (see enclosed figure 2).

Advantageously, the amount of enzyme used in the method according to the invention may be lower when the micro-organism is present in the form of a vegetative dividing cell.

The Inventors have also discovered unexpectedly that it is possible by the method according to the invention to improve easily and at low cost the industrial fermentation processes of micro-organisms upon specific polluted aqueous effluents, because said aqueous effluents may comprise naturally said micro-organism in the form of a dormant spore or in the form of a vegetative dividing cell.

Therefore, said micro-organisms will be able to germinate and/or will be allowed to grow and secrete new enzymes which will increase the protective properties against the inhibitory effects of the detergent.

Therefore, the method according to the invention will allow the improvement of the industrial fermentation processes by micro-organisms, especially the treatment of specific polluted aqueous effluents which comprise already said micro-organism, or the treatment of polluted aqueous effluents wherein micro-organisms (in the form or dormant spores or vegetative dividing cells) have been added in order to increase (accelerate) said fermentation processes.

In addition, the method according to the invention can be combined with one or more treatment method(s) of specific polluted aqueous effluents well known by the person skilled in the art and already described in the scientific literature. For instance, said method can be combined with methods for the removal of heavy metals, degradation of phenolic compounds, treatment of forest industry effluents, etc., obtained from paper pulp, metallurgic or chemical industry.

According to a specific embodiment of the present invention, the enzyme is added in a sufficient amount to the solid or liquid detergent in the laundry, household or personal (shampoos, cosmetics, ...) cleaning solid or liquid products.

Advantageously, said enzyme is kept "active" (by carriers or adjuvants) in said detergent during and after the cleaning process in order to maintain its "activity" its reducing properties against the inhibitory effect of the surfactant(s) (present in the detergent) upon germination and/or growth of the micro-organism present in its aqueous culture medium as described above.

The present invention will be described in details in the following examples in reference to the drawings which are presented as a non-limiting illustration of the present invention.

### Brief description of the drawings

- Figure 1: represents time-course of bacterial growth of cultures inoculated with dormant spores (A) and vegetative cells (B) in the presence of varying concentrations of dodecyl benzene sulfonate.
- Figure 2: represents surfactant concentrations resulting in complete inhibition of growth.
- Figure 3: represents bacterial count on waste water amended agar media, wherein the following waste water / distilled water ratios were used : 100:0 (medium A), 50:50 (medium B), and 10:90 (medium C), medium D corresponding to Plate Count Agar medium.
- Figure 4: represents time-course of the soluble COD of waste water medium inoculated with spores of with a mixture of spores and hydrolases.

### Detailed description of the invention

In order to develop a biotechnological process for urban wastewater treatment, the Inventors have currently studied the potentialities of different strains of *Bacillus.*

They have discovered unexpectedly that it is possible to reduce the inhibitory effect of anionic, cationic, amphoteric and non-ionic surfactants upon germination and growth of a mixture of *Bacillus* strains.

The behaviour of this consortium in liquid and agar-solidified media prepared with domestic wastewater and containing surfactants is also reported.

### Materials and methods

### Strains

The bacterial consortium used for this study contained different strains of *Bacillus.*

### Enzymes

The commercial enzymes used in this work were a *Bacillus subtilis* proteinase, a cellulase, an α-amylase and a lipase. Product specifications are given by the Réalco Company (Louvain-la-Neuve, Belgium).

### Surfactants

The following commercial surfactants were tested: Protectol KLC 80®, Plurafac LF 400®, Lutensol TO 89® and Lutensol GD 50® (obtained from BASF, Ludwigshafen, Germany), Elfapur N 90®, Elfan NS 242® and dodecyl benzene sulfonate (obtained from Akzo Chemie, Düren, Germany) and Betaine AAB® (obtained from Mosselman, Bruxelles, Belgium).

### Media and culture conditions

The synthetic liquid media used for the determination of the inhibitory thresholds were prepared as described by Leitch and Collier (1996).

The sample of domestic wastewater was taken at Braine-l'Alleud (Belgium) at the end of a pipe overhanging the «Légère Eau» brook. After sterilisation by autoclaving, the following parameters were determined: total COD = 820mg O₂.liter⁻¹; soluble COD = 330mg O₂.liter⁻¹; pH = 7.2.

Casaminoacids, Bacto Agar® and Plate Count Agar® were obtained from Difco (Detroit, MI, USA).

Liquid cultures were performed at room temperature (20±1°C) using 250 ml conical flasks which contained 125 ml of medium, the orbital agitation being fixed at 150 rpm.

The bacterial biomass time-course was monitored via turbidity measurements (O.D. at 600 nm).

### Chemical Oxygen Demand (COD)

The Chemical Oxygen Demand (COD) was determined using the NBN-T91-201 norm.

### Non-ionic surfactant concentration

The non-ionic surfactant concentration was determined colorimetrically as described by Rodier (1978). Elfapur N 90® (nonylphe-nol) was used to prepare the standard curve. A concentration of 3.2 (±0.4) ppm was obtained for the sample of wastewater examined.

### Results

### The inhibitory effect of surfactants upon germination and growth.

Seven widely used surfactants including anionic (A-), cationic (C+), amphoteric (AO) and non-ionic (NI) compounds were tested. The Leitch and Collier media containing surfactant concentrations ranging from 0 to 200 ppm were inoculated with either vegetative cells or dormant spores.

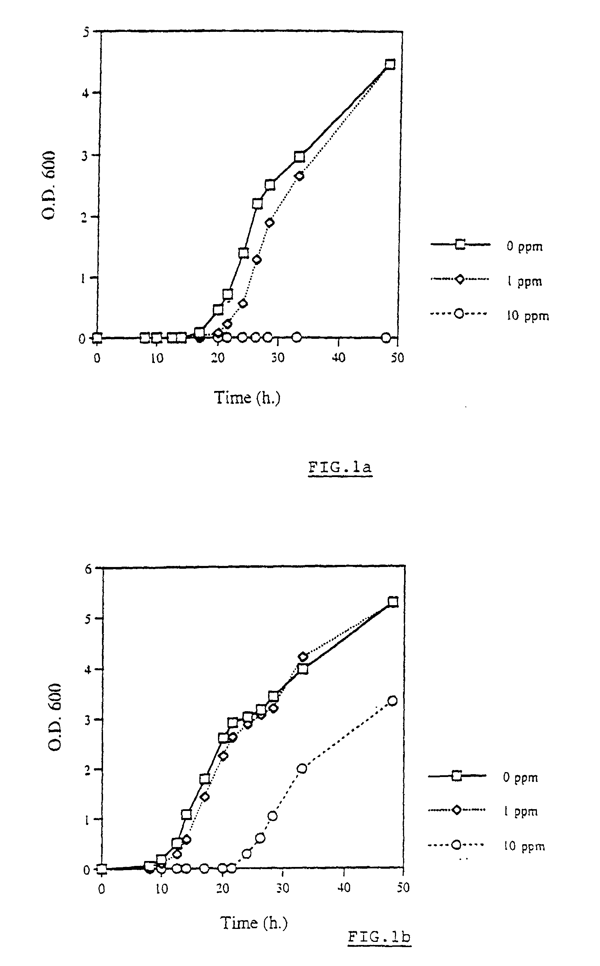

The **Figures 1** show the time-course of the bacterial biomass in the presence of dodecyl benzene sulfonate. For cultures started through inoculation of spores, the presence of 1 ppm surfactant was sufficient to increase the lag period by about 4 hours whereas a concentration of 10 ppm was responsible for a complete inhibition of growth, at least during the first 50 hours of incubation (**Figure 1A**). When vegetative cells were used for the inoculation, the inhibitory effect was largely reduced: the lowest surfactant concentration produced no significant effect whereas the largest one increased the lag period by only about 10 hours (**Figure 1B**).

The surfactant concentrations producing a complete inhibition of growth (no growth during the first 50 hours of incubation) were determined for the seven compounds studied and values corresponding to inoculation with either vegetative cells or spores were compared (**Figure 2**). With the exception of Lutensol GD 50®, a non-ionic surfactant which exhibited no inhibitory effect, all the tested compounds inhibited the germination of the spores and the subsequent growth at surfactant concentrations ranging from 1 to 50 ppm. When media were inoculated with vegetative cells, a significant increase of the inhibitory threshold was observed for all surfactants tested.

### Growth on waste water amended agar media

Different agar-solidified media were prepared using waste water and distilled water in the following ratios : 100:0 (medium A), 50:50 (medium B) and 10:90 (medium C).

All the media contained 2 g of casaminoacids, 2 g of glucose and 15 g of Bacto Agar® per liter. Each batch of petri dishes was seeded with an appropriate volume of a suspension of spores or of a diluted suspension of vegetative cells so as to have 100 cfu per plate.

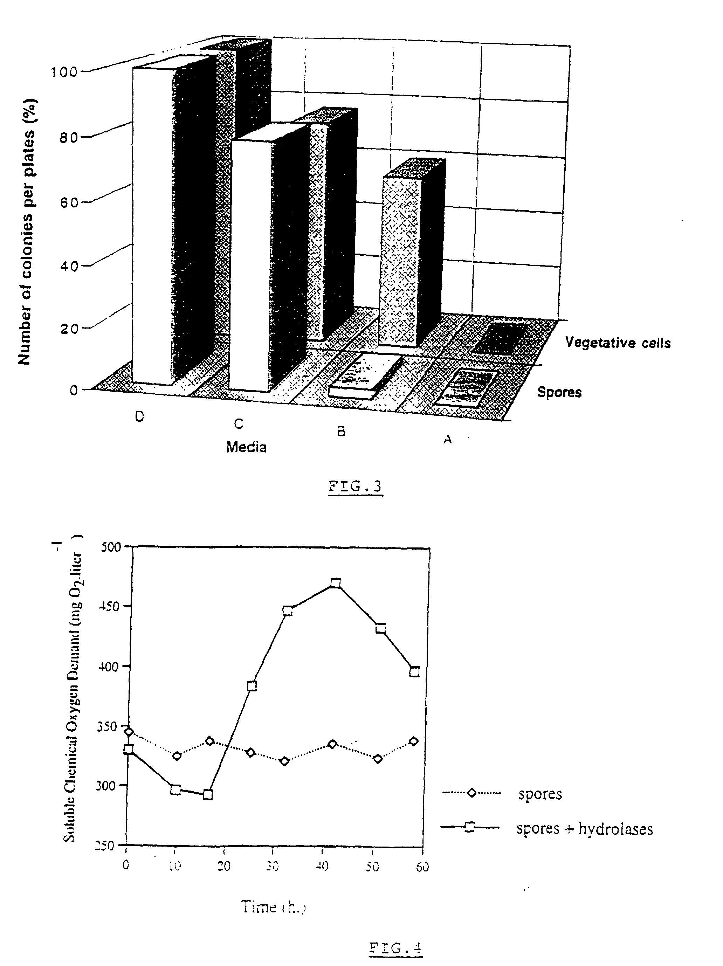

The **Figure 3** gives the number of colonies enumerated after a 24 hour incubation at 37 °C. The results are expressed as percentage of the number of colonies developed on Plate Count Agar medium (medium D) inoculated and incubated in the same conditions.

For media containing non-diluted waste water (medium A), a complete inhibition of growth was observed irrespective of the nature of the inoculum. This inhibition was largely reduced for medium B prepared with vegetative cells only. No significant difference was observed between spores and vegetative cells for the most diluted medium (medium C).

### Addition of hydrolases

Liquid wastewater media (125 ml of sterile wastewater in 250 ml conical flasks) were inoculated with 5.10⁶ spores or with a mixture of the same amount of spores plus neutral subtilisin (390 µg), cellulase (115 µg), α-amylase (235 µg) and lipase (155 µg). The soluble COD of the media was determined as a function of time (**Figure 4**). No significant change was observed when the inoculum contained only spores. The additional presence of hydrolases was responsible for the appearance, after a lag period of 18 hours, of a bell-shaped time-course of the soluble COD. The number of viable cells after 60 hours of incubation at room temperature was determined by enumerating colonies on Plate Count Agar media. Values of 5.10⁶ and 6.10⁷ cfu per 125 ml were obtained for the media inoculated with spores and with the mixture of spores and hydrolases, respectively. These results indicate that the additional presence of hydrolases in the medium allowed the initial solubilisation of the insoluble organic matter (reflected by an increase of the soluble COD) followed by its consumption by the growing cells (reflected by a decrease of the soluble COD and by an increase of the bacterial density).

With the exception of Lutensol GD 50, a non-ionic surfactant which exhibited no inhibitory effect, all the other tested compounds inhibited spore germination and the subsequent growth of the *Bacillus* strains at surfactant concentrations ranging from 1 to 50 ppm, i.e., concentrations close to those reported for domestic wastewaters. Germination appeared to be more affected than cell growth by the presence of surfactants, the inhibitory thresholds being largely increased when inoculation was done with vegetative cells.

The bacterial species forming the consortium used for this study were incapable of growing on non-diluted wastewater agar media. The presence of surfactants was probably the main reason for this inhibition since, as observed previously for the determination of inhibition thresholds for the different surfactants tested, vegetative cells were less sensitive to this inhibition than spores.

A complete absence of growth was also observed when the liquid wastewater medium was inoculated with spores. Under the experimental conditions described, the integrity of spores appears to be fully conserved since the number of viable cells enumerated after a 60-hour incubation was exactly the same as the number of spores initially present.

The fact that the addition of hydrolases in the wastewater medium allowed spore germination and subsequent growth constitutes the most remarkable observed result. This unexpected effect may be due to (i) a peptidase-catalysed activation of spore germination and/or (ii) a much easier assimilation of the organic matter by the cells resulting from the hydrolytic action of the added enzymes which cut macromolecules (e.g. proteins, polysaccharides, triglycerides) into shorter molecules (e.g. aminoacids, glucose, glycerol, fatty acids).

### REFERENCES

- 1.: **Ahn, D.H. et al.** (1996) Biotechnol. Lett. **18**: 917-922.
- 2.: **Arbige, M.V. et al.** (1993) Fermentation of *Bacillus. In* Sonenshein, A.L., Hoch J.A. & Losick R. (ed.), *Bacillus subtilis* and Other Gram-Positive Bacteria: Biochemistry, Physiology, and Molecular genetics. American Society for Microbiology, Washington, D.C., pp 871-895.
- 3.: **Borja, R. et al.** (1995) Bioprocess Eng. 13: 317-322.
- 4.: **Chitra, S. et al.** (1996) J. Gen. Appl. Microbiol. **42**: 355-361.
- 5.: **Durand, A. & Golicheff, A.** (1978) Etude des composants des eaux usées domestiques. La Technique de l'Eau et de l'Assainissement **383**: 27-42.
- 6.: **Feijoo, G. et al.** (1995) Biotechnol. Lett. **17**: 1261-1266.
- 7.: **Iliuta, I.** (1997) J. Chem. Technol. Biotechnol. **68**: 47-56.
- 8.: **Jaspers, C.J. & Penninckx, M.J.** (1996) Biotechnol. Lett. **18**: 1257-1260.
- 9.: **Konopka, A. et al.** (1996) Appl. Environ. Microbiol. **62**: 3292-3297.
- 10.: **Leitch, J. & Collier, P.J.** (1996) A new chemically-defined medium for *Bacillus subtilis* (168) NCIMB 12900. Appl. Microbiol. **22**: 18-20.
- 11.: **Macaskie, L.E. et al.** (1997) Biotechnol. Bioeng. **53**: 100-109.
- 12.: **Pena, M.M. et al.** (1996) Bioresource Technol. **57**: 229-235.
- 13.: **Rodier, J.** (1978) L'Analyse de l'Eau, Eaux Naturelles et Eaux Residuaires, 6^{ème} édition, Bordas, Paris.
- 14.: **Sigoillot, J.-C. & Nguyen, M.-H** (1992) Appl. Environ. Microbiol. **58**: 1308-1312.
- 15.: **Travieso, L. et al.** (1996) Bull. Environ. Contam. Toxicol. **57**: 986-992.
- 16.: **Wakelin, N.G. & Forster, C.F.** (1997) Bioresource Technol. **59**: 37-43.
- 17.: **Williams, N.D. & Russell, A.D.** (1993) J. Appl. Bacteriol. 75: 76-81.
- 18.: **Zissi, U. & Lyberatos, G.** (1996) Wat. Sci. Technol. **34**: 495-500.

## Claims

1. Method for removing or reducing the effects of detergents upon germination and/or growth of a micro-organism present in an aqueous culture medium, **characterised in that** a sufficient amount of one or more enzyme(s) selected from the group consisting of proteases, cellulases, alpha-amylases, lipases or a mixture thereof is added to said aqueous medium of said micro-organism.

2. Method according to **claim 1**, **characterised in that** the detergent comprises a surfactant which is preferably selected from the group consisting of the anionic, cationic, amphoteric and/or non-ionic surfactants.

3. Method according to any of the preceding **claims 1 or 2**, wherein the aqueous culture medium is a waste water effluent.

4. Method according to any of the preceding **claims 1 to 3**, **characterised in that** the micro-organism is a bacterial strain.

5. Method according to **claim 4**, **characterised in that** the bacterial strain is selected from the group consisting of the strains belonging to the pseudomonas, bacillus, acinetobacter and rhodococcus genera.

6. Method according to any of the **claims 1 to 3**, **characterised in that** the micro-organism is selected from the group consisting of fungi and microscopic algae.

7. Method according to any of the preceding **claims 1 to 6**, **characterised in that** the micro-organism is a dormant spore.

8. Method according to any of the claims 1 to 7, **characterised in that** the micro-organism is a vegetative dividing cell.

9. Method according to any of the preceding **claims 1 to 8**, **characterised in that** the amount of added enzyme is comprised between 1 and 5000 µg weight for 100 ml aqueous culture medium comprising between 0,001 and 1000 ppm detergent.

## Patentansprüche

1. Verfahren zur Aufhebung oder Verringerung der Wirkungen von Reinigungsmitteln auf die Keimung und / oder das Wachstum eines in einem wässrigen Kulturmedium vorhandenen Mikroorganismus, **dadurch gekennzeichnet, dass** eine genügende Menge von einem Enzym oder von mehreren Enzymen, die aus der Gruppe bestehend aus Proteasen, Cellulasen, Alpha-Amylasen, Lipasen oder aus einer Mischung derselben ausgewählt werden, zu dem besagten wässrigen Medium des besagten Mikroorganismus hinzugesetzt wird.

2. Verfahren gemäss Anspruch 1, **dadurch gekennzeichnet, dass** das Reinigungsmittel einen grenzflächenaktiven Stoff enthält, der vorzugsweise aus der Gruppe bestehend aus anionischen, kationischen, amphoteren und / oder nicht ionischen grenzflächenaktiven Stoffen ausgewählt wird.

3. Verfahren gemäss irgendeinem der vorhergehenden Ansprüche 1 oder 2, wobei das wässrige Kulturmedium ein Abwasserausfluss ist.

4. Verfahren gemäss irgendeinem der vorhergehenden Ansprüche 1 bis 3, **dadurch gekennzeichnet, dass** der Mikroorganismus ein bakterieller Stamm ist.

5. Verfahren gemäss Anspruch 4, **dadurch gekennzeichnet, dass** der bakterielle Stamm aus der Gruppe bestehend aus Stämmen ausgewählt wird, die zu den Gattungen Pseudomonas, Bacillus, Acinetobacter und Rhodococcus gehören.

6. Verfahren gemäss irgendeinem der Ansprüche 1 bis 3, **dadurch gekennzeichnet, dass** der Mikroorganismus aus der Gruppe bestehend aus Pilzen und mikroskopischen Algen ausgewählt wird.

7. Verfahren gemäss irgendeinem der vorhergehenden Ansprüche 1 bis 6, **dadurch gekennzeichnet, dass** der Mikroorganismus eine schlafende Spore ist.

8. Verfahren gemäss irgendeinem der Ansprüche 1 bis 7, **dadurch gekennzeichnet, dass** der Mikroorganismus eine sich vegetativ teilende Zelle ist.

9. Verfahren gemäss irgendeinem der vorhergehenden Ansprüche 1 bis 8, **dadurch gekennzeichnet, dass** die Menge des zugesetzten Enzyms zwischen 1 und 5000 µg an Gewicht für 100 ml eines wässrigen Kulturmediums liegt, welches zwischen 0,001 und 1000 ppm Reinigungsmittel aufweist.

## Revendications

1. Procédé d'élimination ou de réduction des effets de détergents sur la germination et/ou la croissance d'un micro-organisme présent dans un milieu de culture aqueux, **caractérisé en ce qu'**une quantité suffisante d'une ou plusieurs enzyme(s) choisie(s) dans le groupe constitué des protéases, des cellulases, des alpha-amylases, des lipases ou d'un de leurs mélanges est ajoutée audit milieu aqueux dudit micro-organisme.

2. Procédé selon la revendication 1, **caractérisé en ce que** le détergent comprend un agent tensioactif qui est de préférence choisi dans le groupe constitué des agents tensioactifs anioniques, cationiques, amphotères et/ou non ioniques.

3. Procédé selon l'une quelconque des revendications 1 à 2, dans lequel le milieu de culture aqueux est un effluent d'eaux résiduaires.

4. Procédé selon l'une quelconque des précédentes revendications 1 à 3, **caractérisé en ce que** le micro-organisme est une souche bactérienne.

5. Procédé selon la revendication 4, **caractérisé en ce que** la souche bactérienne est choisie dans le groupe constitué des souches appartenant aux genres Pseudomonas, Bacillus, Acinetobacter et Rhodococcus.

6. Procédé selon l'une quelconque des revendications 1 à 3, **caractérisé en ce que** le micro-organisme est choisi dans le groupe constitué des champignons et des algues microscopiques.

7. Procédé selon l'une quelconque des précédentes revendications 1 à 6, **caractérisé en ce que** le micro-organisme est une spore dormante.

8. Procédé selon l'une quelconque des revendications 1 à 7, **caractérisé en ce que** le micro-organisme est une cellule en division végétative.

9. Procédé selon l'une quelconque des précédentes revendications 1 à 8, **caractérisé en ce que** la quantité d'enzyme ajoutée est comprise entre 1 et 5000 µg en poids pour 100 ml de milieu de culture aqueux comprenant entre 0,001 et 1000 ppm de détergent.
